## Europäisches Patentamt
## European Patent Office
## Office européen des brevets

(11) Numéro de publication: **0 187 578**
**B1**

(12) **FASCICULE DE BREVET EUROPÉEN**

(45) Date de publication du fascicule du brevet:
**14.12.88**

(21) Numéro de dépôt: **85402430.4**

(22) Date de dépôt: **06.12.85**

(51) Int. Cl.⁴: **G 21 C 3/32**

(54) **Assemblage de combustible pour réacteur nucléaire.**

(30) Priorité: **06.12.84 FR 8418645**

(43) Date de publication de la demande:
**16.07.86 Bulletin 86/29**

(45) Mention de la délivrance du brevet:
**14.12.88 Bulletin 88/50**

(84) Etats contractants désignés:
**BE CH DE GB IT LI NL SE**

(56) Documents cité:
**EP-A-0 054 236**
**FR-A-2 163 677**
**FR-A-2 302 570**
**FR-A-2 337 407**
**FR-A-2 365 861**
**US-A-3 954 560**
**US-A-4 059 483**

(73) Titulaire: **FRAMATOME, Tour Fiat 1 place de la Coupole, F-92400 Courbevoie (FR)**

(72) Inventeur: **Leclercq, Joseph, 30, Route de Champagne, F-69370 Saint Didier au Mont d'Or (FR)**

(74) Mandataire: **Fort, Jacques, CABINET PLASSERAUD 84, rue d'Amsterdam, F-75009 Paris (FR)**

## Description

L'invention concerne les assemblages de combustible pour réacteur nucléaire du type comprenant un squelette comportant deux pièces d'extrémité reliées par des éléments allongés tels que des tubes guides et plusieurs grilles réparties le long des tubes guides et formant des cellules de maintien d'un faisceau de crayons de combustible aux noeuds d'un réseau régulier. Elle trouve une application particulièrement importante dans les réacteurs à eau légère du type dit "à variation de spectre", dans lesquels on utilise l'excès de réactivité initiale en durcissant le spectre des neutrons par sous-modération, de façon qu'une fraction accrue des neutrons soit absorbée par du matériau fertile. Dans ces réacteurs, on augmente le taux de modération pour un épuisement donné du combustible, par exemple par extraction de crayons contenant un matériau fertile (uranium appauvri par exemple) hors de tubes guides qui sont alors envahis par de l'eau constituant modérateur.

Dans les assemblages de combustible du type qui vient d'être décrit, les grilles remplissent un certain nombre de fonctions distinctes. D'une part, elles entretoisent et elles supportent les crayons contenant la matière fissile. D'autre part, elles assurent la résistance aux chocs transversaux que peuvent subir les assemblages lors des manutentions, des incidents de fonctionnement et, éventuellement, des accidents séismiques. Dans la majeure partie des cas, les grilles doivent encore provoquer une turbulence dans l'écoulement et une déviation des filets de réfrigérant destinés à homogénéiser la température et a éviter la formation de points chauds qui pourraient conduire à des ébullitions locales et à des ruptures de gaine.

Les grilles nécessaires pour remplir toutes ces fonctions imposent à l'écoulement du réfrigérant dans l'assemblage une perte de charge que l'on cherche évidemment à réduire le plus possible. Mais, parallèlement, les études faites pour accroître encore les performances thermiques des réacteurs nucléaires ont conduit à augmenter le débit de réfrigérant et, par là même, les forces exercées par ce réfrigérant sur les éléments des assemblages. Et la réalisation d'assemblages pour réacteur à variation de spectre oblige, pour permettre de placer dans un assemblage de section droite déterminée un nombre de crayons de matériau fissile sensiblement égal à celui que l'on a dans un assemblage classique, à adopter un pas plus faible, puisqu'il faut libérer la place nécessaire au passage de tubes guides en nombre accru, dont certains sont prévus pour recevoir des crayons mobiles permettant de commander le taux de modération. Finalement, on réduit la section droite disponible pour le passage du réfrigérant, ce qui provoque une perte de charge accrue et une diminution de la marge de protection nucléée avant ébullition nucléée dans la partie haute (c'est-à-dire la partie aval dans le sens d'écoulement du réfrigérant) des assemblages.

On connaît par ailleurs (USA-A-4 059 483) un assemblage combustible du type défini par le préambule de la revendication 1. Cet assemblage ne se différencie de ceux couramment utilisés que par l'adjonction d'au moins une grille, avantageusement en acier inoxydable, entre deux des grilles habituelles réparties régulièrement le long de l'assemblage.

L'invention vise à fournir un tel assemblage de combustible présentant, comparé aux assemblages antérieurs, une perte de charge réduite tout en ayant une tenue mécanique comparable. Dans ce but, l'invention propose un assemblage dans lequel les grilles sont de plusieurs types différents. De façon plus précise, l'invention propose un assemblage du type défini par le préambule de la revendication 1, caractérisé en ce que la ou les grilles médianes sont munies d'ailettes de création de turbulences dans l'écoulement du réfrigérant le long de l'assemblage, et en ce qu il comporte des grilles basses démunies d'ailettes et assurant l'entretoisement des crayons, et des grilles hautes munies d'ailettes et assurant l'entretoisement des crayons, les grilles hautes et basses imposant au réfrigérant une perte de charge plus faible que les grilles médianes.

Cette disposition permet de réduire notablement la perte de charge totale à débit égal du fait que seules les grilles médianes, qui doivent avoir une rigidité élevée, imposent une perte de charge comparable à celle des grilles classiquement utilisées dans les assemblages de combustible antérieurs, cependant légèrement plus faible du fait de l'absence de ressorts, tandis que les grilles hautes et basses peuvent avoir un coefficient de perte de charge beaucoup plus faible que les grilles médianes.

Dans la pratique, les grilles médianes auront généralement une hauteur supérieure à celle des grilles hautes et basses et chaque paroi d'une cellule de grille médiane présentera deux bossages d'appui sur l'élément de combustible correspondant, ces bossages étant décalés dans le sens de l'écoulement. Les grilles hautes et basses pourront avoir un seul bossage par paroi.

Pour augmenter la rigidité des grilles médianes, ces grilles pourront être prolongées vers l'amont (c'est-à-dire vers le bas) par des languettes présentant un pli dans le sens longitudinal et jouant le rôle de raidisseur.

On a déjà proposé des assemblages de combustible dans lesquels les crayons de combustible ne sont supportés axialement que par les deux grilles extrêmes, si tuées près des pièces d'extrémité inférieure et supérieure (document EP-A-0 054 236 correspondent au FR-A-2 496 316). Ces deux grilles extrêmes peuvent être an un matériau différent des autres griles, ayant une plus forte absorption neutronique (par exemple en alliage à base de nickel-chrome, dit "INCONEL", au lieu d'être en alliage à base de zirconium), du fait qu'elles sont dans des zones terminales du coeur. Le but recherché est toutefois uniquement, dans ce cas, d'améliorer le bilan neutronique en éliminant au maximum dans le coeur les matériaux ayant une section d'absorption neutronique notable. Un résultat comparable peut être atteint, dans le cas de l'invention, en prévoyant, au-dessus des grilles de maintien mentionnées plus haut et constituées en matériau à faible coefficient d'absorption, une grille supplémentaire de supportage des crayons.

Du fait de la réduction de la perte de charge subie par l'écoulement au passage de chaque grille, le nombre total des grilles peut être augmenté dans l'assemblage de combustible; au surplus, il sera souvent avantageux de répartir ces grilles non pas à intervalles égaux, mais à intervalles progressivement décroissants dans le sens de l'écoulement de façon à augmenter les turbulences dans la partie aval et à reculer en conséquence l'apparition du début d'ébullition nucléaire.

L'invention sera mieux comprise à la lecture de la description qui suit d'un mode particulier d'exécution, donné à titre d'exemple non limitatif. La description se réfère aux dessins qui l'accompagnent, dans lesquels :

- la Figure 1 montre schématiquement un squelette d'assemblage de combustible auquel est applicable l'invention, représenté en élévation;
- la Figure 2 est une vue très schématique, en plan et à grande échelle, montrant l'entrecroisement des plaquettes d'une grille pour délimiter une cellule;
- la Figure 3 est un schéma de principe en perspective, où l'échelle n'est pas respectée, montrant les bossages ménagés sur deux des parois d'une grille basse de l'assemblage de la Figure 1;
- la Figure 4 est une vue en coupe suivant la ligne IV - IV de la Figure 3;
- les Figures 5 et 6, similaires aux Figures 3 et 4, correspondent à une grille mediane;
- la Figure 7 est une vue en élévation montrant, de façon plus réaliste que les Figures 5 et 6, une forme possible des plaquettes constitutives d'une grille médiane, en coupe suivant un plan vertical parallèle à une plaquette;
- la Figure 8 est une vue de dessus d'un fragment de la Figure 7;
- la Figure 9, similaire à la Figure 3, correspond à une grille haute de l'assemblage de la Figure 1;
- la Figure 10 est une vue de dessus d'un fragment d'une grille extrême haute utilisable dans un assemblage du type montré en Figure 1;
- la Figure 11 est une vue en coupe suivant un plan vertical montrant un fragment de la partie haute de l'assemblage de la Figure 1, et en particulier la coopération d'un tube guide, de la pièce d'extrémité supérieure et de la grille extrême de supportage axial;
- la Figure 12 est un schéma à grande échelle, correspondant à la zone placée dans le cadre en traits mixtes sur la Figure 11, montrant le supportage d'un crayon par la grille extrême;
- la Figure 13 est une vue de dessus montrant une pièce d'extrémité supérieure utilisable dans l'assemblage de la Figure 1;
- la Figure 14 est une vue en élévation et en coupe partielle montrant une constitution possible de la pièce d'extrémité inférieure de l'assemblage de la Figure 1;
- la Figure 15 est une vue de dessus de la pièce d'extrémité inférieure montrée en Figure 14, selon une coupe suivant la ligne XV - XV de la Figure 14;
- la Figure 16 est une vue de détail montrant une variante de fixation d'un tube guide sur la pièce d'extrémité inférieure de l'assemblage;
- la Figure 17 montre un mode de guidage possible d'un crayon dans la pièce d'extrémité inférieure, au niveau de la ligne XVII - XVII de la Figure 18;
- la Figure 18 est une vue de dessous de la Figure 17;
- la Figure 19, similaire a la Figure 14, montre une variante de réalisation.

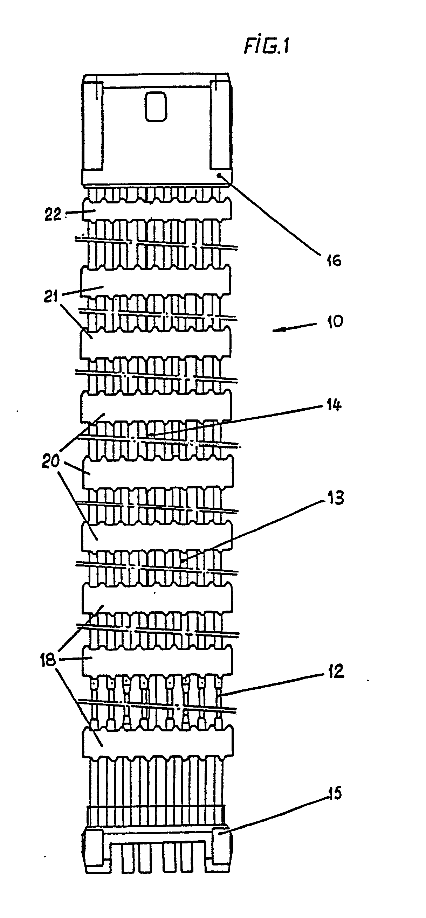

L'assemblage de combustible dont une constitution de principe est montrée en Figure 1 est utilisable dans un réacteur à eau légère sous pression à variation de spectre, du genre décrit par exemple dans les documents FR-A-2 496 320 (WESTINGHOUSE) et FR-A-2 535 509 (FRAMATOME et Cie), auxquels on pourra se reporter. Cet assemblage 10 comporte des crayons de matériau fissile (non représentés) disposés aux noeuds d'un réseau à maille carrée. Dans ce réseau sont placés des tubes guides, également répartis de façon régulière, de deux types différents c'est ainsi que les tubes guides 12 constituent l'ossature de l'assemblage et sont réunis aux pièces d'extrémité et aux grilles tandis que les tubes guides 13, non reliés mécaniquement aux pièces d'extrémité, sont montés coulissants, dans les alvéoles des grilles. Certains de ces tubes guides sont destinés à guider des crayons de commande contenant un matériau absorbant et permettant de régler la réactivité. D'autres de ces tubes guides sont prévus pour guider des crayons destinés à régler le taux de modération, qui seront en général des crayons contenant un matériau fertile et permettant de chasser l'eau contenue dans les tubes guides. Au centre du réseau des crayons de combustible, pourra être prévu un tube d'instrumentation 14.

Le squelette de l'assemblage comprend, en plus des tubes, une pièce d'extrémité inférieure 15, une pièce d'extrémité supérieure 16 et une série de grilles qui seront maintenant décrites. Ces grilles, fixées sur certains au moins des tubes guides, peuvent être réparties en quatre catégories, qui seront successivement décrites et qu'on désignera par les noms de "grilles basses 18", "grilles médianes 20", "grilles hautes 21" et "grille extrême de support 22".

Les grilles 18, 20, 21 et 22 sont constituées par deux jeux de plaquettes entrecroisées et assemblées à mi-fer, délimitant des cellules. En général, les grilles 18, 20, 21 et 22 seront constituées en un alliage à base de zirconium à faible section de capture, souvent en alliage dit "ZIRCALOY". Toutefois, la grille 22, qui a une fonction de supportage, pourra être constituée en un alliage ayant de meilleures caractéristiques mécaniques, par exemple en l'alliage dit "INCONEL".

La Figure 2 montre l'aspect, en vue de dessus, dos grilles 18, 20 et 21. Ces grilles comportent deux jeux de plaquettes 24 dans lesquelles sont ménagées des fentes 26 d'assemblage à mi-fer (Figure 3). Une fois emboîtées, les plaquettes sont fixées par soudage en des points 28, par exemple par faisceau d'électrons. Les plaquettes 24 sont embouties de façon à créer des bossages faisant saillie de chaque côté de la plaquette, dans deux alvéoles adjacents, tels que les alvéoles 30 et 32 sur la Figure 2. Ces bossages assurent l'entretoisement latéral des crayons de matériau fissile, tels que le crayon 34 sur la Figure 2.

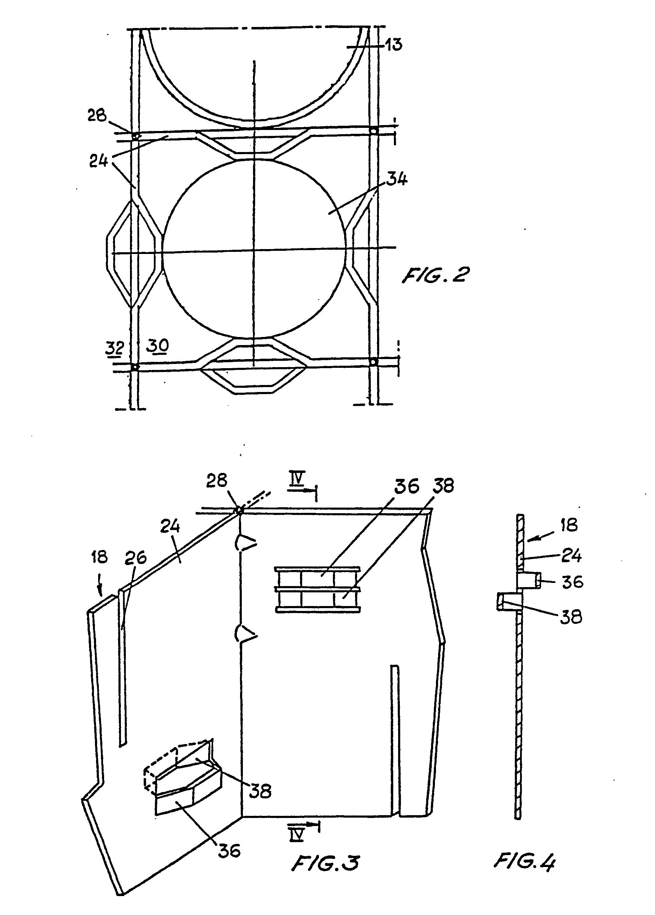

Les grilles 18 (Figures 3 et 4) comportent, sur chaque face d'un alvéole, un seul bossage. Les bossages correspondant à l'alvéole 30 sont désignés par la référence 36 sur les Figures 3 et 4. Les bossages sur deux faces sont à un niveau différent de celui dos bossages portés par les deux faces perpendiculaires. Chaque crayon de matériau fissile 34 est donc entretoisé latéralement par contact avec quatre bossages. A chaque bossage 36 est associé un bossage 38 orienté en sens opposé, sauf dans le cas des parois qui délimitent un alvéole occupé par un tube guide 13 (Figure 2). Les grilles 18 ne comportent pas d'ailettes. Elles ne participent donc que faiblement au mélange des filets fluides et, en conséquence, n'introduisent qu'une très faible perte de charge. Cette absence de mélange ne représente pas un inconvénient appréciable car, dans la zone où elles se trouvent, le réfrigérant est encore loin de la température maximale qu'il atteindra à la sortie de l'assemblage. Les grilles 18 assurent essentiellement l'entretoisement latéral des crayons, résultat qui peut être obtenu avec une hauteur relativement faible des grilles et sans encombrement important par des composants de supportage des crayons.

Les grilles 18 peuvent être liées aux tubes guides 12 par des pattes prolongeant les plaquettes et soudées sur les tubes guides. Les grilles 18 peuvent être simplement soit positionnées à frottement doux dans les alvéoles concernés, soit maintenues au contact des tubes guides 13 par des renflements pratiqués sur les plaquettes par déformation.

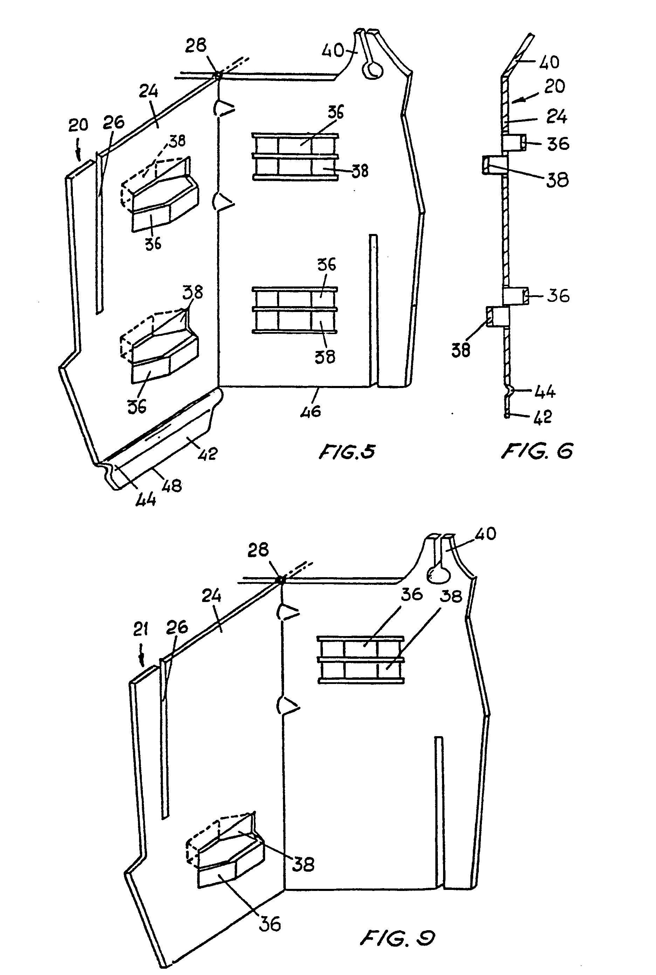

Les grilles médianes 20 peuvent avoir la constitution de principe montrée en Figures 5 et 6. Ces grilles assurent la quasi-totalité des fonctions des grilles (toutes identiques entre elles) utilisées dans les assemblages de combustible classiques à l'exception du supportage axial des crayons puisque la grille montrée en Figures 5 et 6 est démunie de ressorts de maintien élastique.

Une première fonction des grilles 20 est de protéger le faisceau de crayons de matériau fissile contre les chocs latéraux que peut subir l'assemblage 10. Ces grilles 20 doivent en particulier résister sans écrasement transversal à des chocs d'origine séismique ou accidentels en fonctionnement ou lors des manutentions. Les grilles 20 doivent avoir une épaisseur et une hauteur telles qu'il ne puisse y avoir, par déformation de la grille, un rétrécissement des passages hydrauliques tel que la température de la gaine des crayons atteigne une valeur dangereuse. Il ne doit pas y avoir non plus déformation des tubes guides ou de leur réseau gênant le déplacement des crayons appartenant aux grappes.

Pour cette raison, les plaquettos 24 des grilles 20 seront généralement plus épaisses et plus larges que les plaquettes des grilles 18.

La seconde fonction des grilles 20 est d'introduire des turbulences dans l'écoulement du fluide de refroidissement traversant de bas en haut les alvéoles tels que 30. Pour cela, les plaquettes peuvent être munies d'ailettes 40 inclinées, ailettes par exemple du type décrit dans la demande de brevet FR-8 416 803.

Pour augmenter encore la rigidité de la grille, certaines au moins des plaquettes se prolongent avantageusement par une lèvre 42 présentant au moins un pli longitudinal 44 de raidissement. Les lèvres 42 ont en plus l'avantage de donner au réfrigérant deux niveaux distincts 46 et 48 d'attaque de l'alvéole 30.

Les grilles 20 assurent encore une fonction d'entretoisement des crayons, assurée par des bossages 36, 38 placés sur chaque face à deux niveaux et non plus à un seul niveau comme dans le cas des grilles 18.

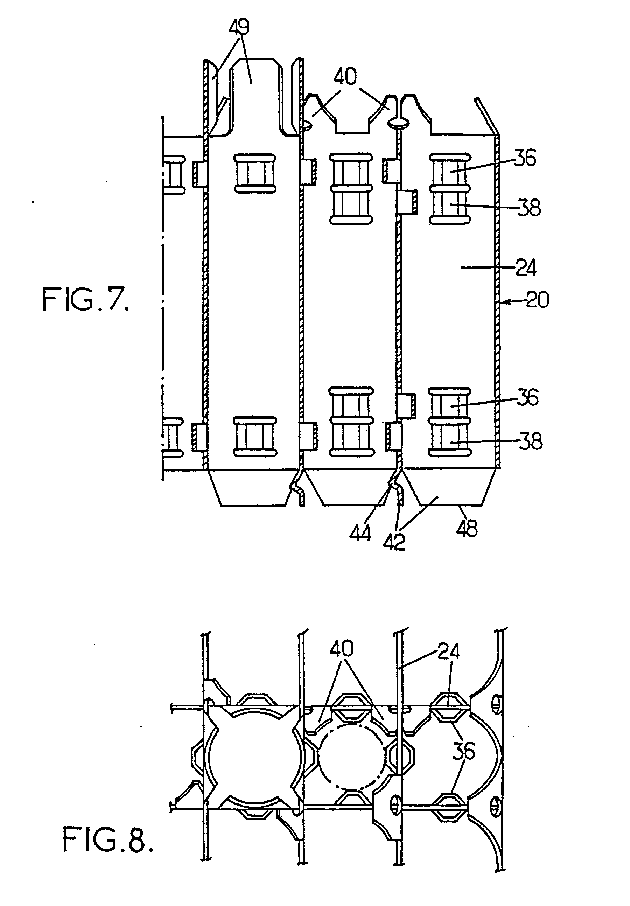

Les Figures 7 et 8 montrent une réalisation possible des grilles 20 et font apparaître des languettes 49 de fixation sur certains des tubes guides.

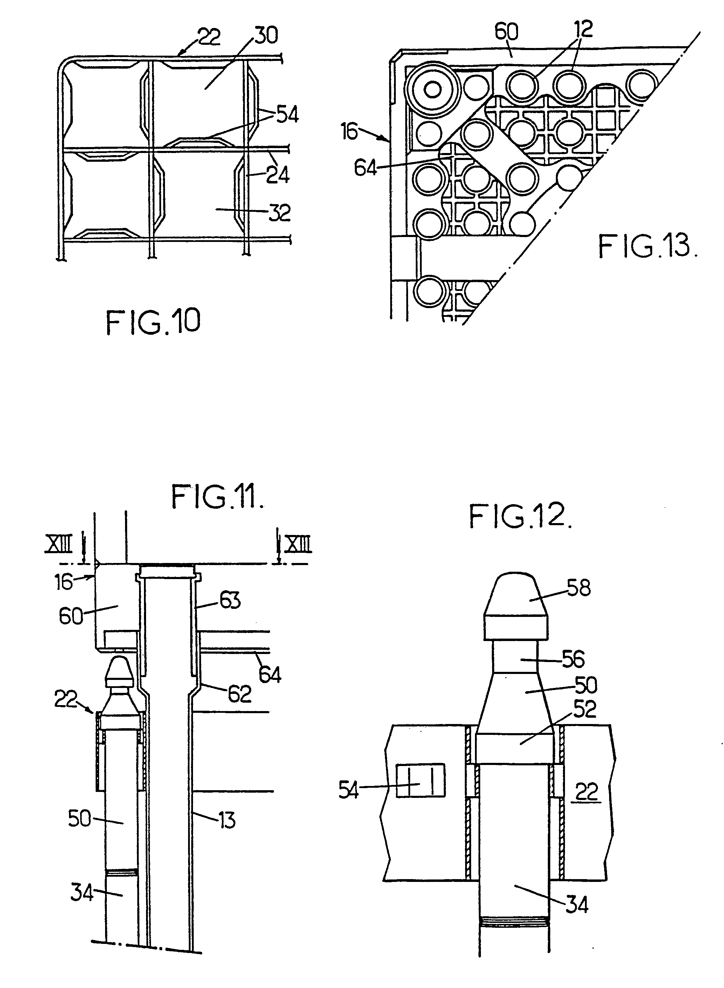

Enfin, les grilles hautes 21 assurent la même fonction d'entretoisement que les grilles 18 et assurent de plus la fonction de mélange des filets fluides nécessaire dans la partie de l'assemblage où le fluide réfrigérant est à température maximale. La Figure 9 (où les éléments correspondant à ceux de la Figure 3 sont désignés par le même numéro de référence) montre que les plaquettes sont munies d'ailettes 40 qui peuvent avoir la même constitution que celles des grilles 20.

On constate que les grilles 21, placées à un endroit critique du point de vue de l'ébullition nucléée ou DNB, répondent à la double condition de réduction des pertes de charge et d'homogénéisation du réfrigérant.

On donnera maintenant, à titre de simple exemple, des indications chiffrées sur les dimensions que peuvent avoir les grilles 18, 20 et 21.

Les grilles 18 peuvent être constituées de

plaquettes 24 en alliage à base de zirconium dit "ZIRCALOY" ayant une hauteur comprise entre 20 et 40 mm, avantageusement 34 mm, et une épaisseur comprise entre 0,2 et 0,5 mm. Les grilles 20 peuvent alors être constituées de plaquettes en "ZIRCALOY" ayant une hauteur comprise entre 40 et 70 mm (avantageusement 63 mm) et une épaisseur comprise entre 0,3 et 0,6 mm (avantageusement 0,4 mm). Les grilles 21 ont les mêmes dimensions que les grilles 18 et ne s'en différencient que par l'adjonction d'ailettes.

Si dans ces conditions on considère que le coefficient de perte de charge d'une grille de type classique, comportant des ressorts de maintien des crayons, est égal à 1, les coefficients de perte de charge des grilles 18, 20 et 21 seront respectivement d'environ 0,5 ; 0,9 ; et 0,7.

Si l'assemblage 10 comporte alors trois grilles 18, trois grilles 20 et deux grilles 21, on arrive à une perte de charge cumulée de 5, 6, au lieu de 8 pour huit grilles classiques. Le gain est d'environ 30 %.

De ce fait, l'invention permet, à perte de charge égale, d'augmenter le nombre des grilles destinées à homogénéiser le fluide réfrigérant sur la hauteur du faisceau. Cette augmentation permet également de donner des écartements variables aux grilles et, en particulier, de renforcer l'homogénéisation dans la partie aval du faisceau, grâce à des grilles 21 rapprochées.

Au surplus, l'augmentation du nombre de grilles améliore la stabilité géométrique de l'assemblage et limite les phénomènes d'arcure sous irradiation des crayons contenant du matériau fissile.

Bien que l'emploi de bossages 36 et 38 pour retenir les crayons représente un avantage substantiel du point de vue de la réduction des pertes de charge, l'invention peut également être mise en oeuvre an conservant, au moins sur certaines des grilles, des ondulations réalisées par découpage et emboutissage de la plaquette.

L'assemblage 10 montre en Figure 1 comporte de plus une grille extrême 22 placée immédiatement sous la pièce d'extrémité supérieure 16. Cette position dans une région du coeur où le flux neutronique est réduit fait que la grille 22 peut être constituée en un matériau ayant une section d'absorption des neutrons plus importante que celle du "Zircaloy" et choisi pour ses qualités de résistance mécanique. Dans ce cas, la grille 22 peut par exemple être constituée en alliage ferreux ou en alliage Ni-Cr tel que l'"INCONEL".

La grille 22 a pour unique fonction de maintenir axialement les crayons de matériau fissile 34. Elle ne comporte donc pas d'ailettes et ses constituants pourront être dessinés avec le souci de minimiser les pertes de charge.

Les Figures 10 à 12 montrent une constitution possible de la grille 22. Les plaquettes 24 de la grille 22 définis sent des alvéoles dans lesquels sont insérés les crayons 34 de matériau fissile, chaque crayon est muni d'un bouchon 50, comportant une collerette 52 présentant un épaulement inférieur annulaire. Dans les plaquettes 24 de la grille 22 sont ménagés, par découpage et emboutissage, des bossages 54 de profondeur telle qu'ils viennent en contact avec l'épaulement de la collerette 52 et permettent de retenir le crayon. Le diamètre externe de l'epaulement est par exemple de 10,5 mm, alors que le diamètre du crayon dans sa partie courante est de 9,5 mm et que les bossages 54 sont prévus pour venir en contact avec le crayon. Le bouchon comporte encore, au-dessus de la collerette 52, un fût 56 et une ogive 58 classique, destinés à permettre de saisir le crayon.

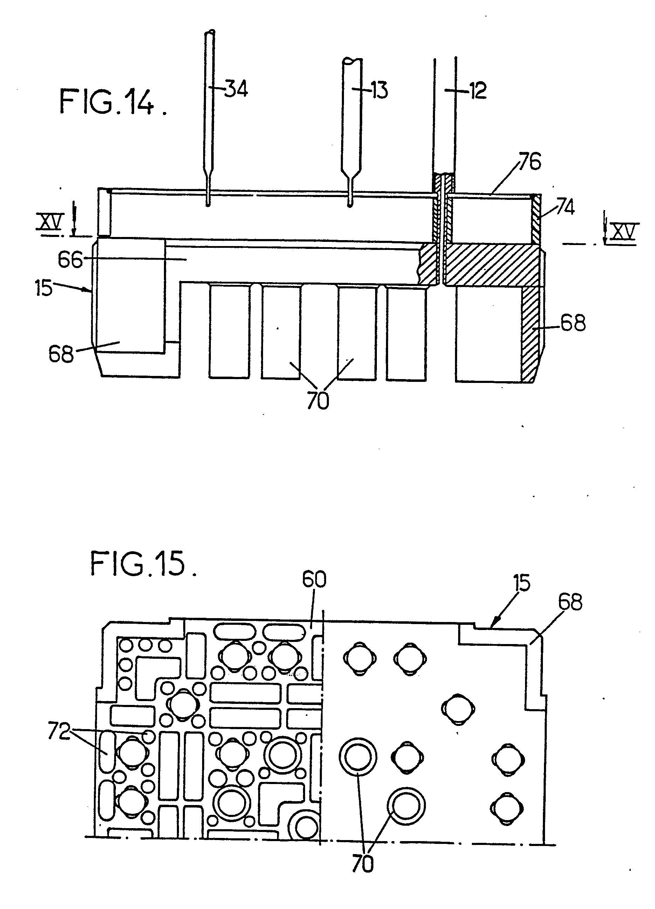

La Figure 11 montre également une fraction de la pièce d'extrémité supérieure 16 de l'assemblage 10, placée à proximité de la grille 22. La pièce 16, également représentée sur la Figure 13, se compose d'une plaque 60 ayant de larges ouvertures de passage du fluide réfrigérant. Les tubes guides 12 et 13 appartenant au squelette de l'assemblage sont fixés à la plaque 60 par une liaison vissée par exemple. La grille 22 est directement soudée aux tubes 12, lorsque les matériaux qui constituent ces deux éléments sont compatibles, par exemple lorsque la grille 22 et les tubes 12 sont en alliage a base de zirconium. Lorsque par contre la grille 22 est en acier inoxydable, un manchon intermédiaire en acier inoxydable sera interposé entre le tube et la grille. La Figure 11 montre, de façon très schématique, un mode possible de fixation à l'aide d'un manchon fileté 62 et d'une douille 63.

En règle générale, seule une partie des tubes guides 12 et 13 sera reliée à la plaque 60, ce qui augmente la perméabilité de cette plaque et réduit les pertes de charge imposées au fluide réfrigérant par la pièce d'extrémité supérieure.

Dans un assemblage qu'on peut considérer comme représentatif, ayant deux cent soixante-sept crayons de matériau fissile disposés selon un réseau 18 x 18 à maille carrée, seize tubes guides de guidage des crayons de commande et quarante tubes guides de guidage de crayons fertiles, une trentaine des tubes guides 13 ne sont pas fixés à la plaque 60.

La pièce d'extrémité supérieure 16 porte, sous la plaque 60, un plateau 64 formé par un quadrillage dont les noeuds coïncident avec l'axe des crayons 34. Le plateau 64 est destiné à limiter le déplacement des crayons 34 vers le haut. Ce plateau 64 est rapporté par soudage sur la plaque 60.

On voit que, une fois mis en place, les crayons 34 sont soutenus par la grille 22 et que leur déplacement vers le haut est limite par le plateau 64. En conséquence, ils ne peuvent se dilater axialement, en particulier sous irradiation, que vers le bas de l'assemblage.

La pièce d'extrémite inférieure 15 peut avoir la constitution montrée schématiquement en Figures 14 et 15. Cette pièce comporte (contrairement aux pièces d'extrémité inférieures des assemblages de combustible classiques, une plaque unique 66 de support et de répartition de fluide. Cette plaque peut être fabriquée par moulage. Elle n'a pas à assurer un rôle de limitation du déplacement des crayons 34 vers le bas, puisque ce rôle est rempli par la grille 22.

A la plaque 66 sont fixées des jupes 68 chanfreinées qui la prolongent vers le bas et facilitent l'engagement de l'assemblage sur des guides (non représentés, lors de son insertion dans le coeur du réacteur. Des entretoises tubulaires 70 fixées à la face inférieure de la plaque 66 rigidifient la pièce 15 dans laquelle sont ménagés des trous 72 de passage du réfrigérant.

Une jupe 74 est soudée sur la face supérieure de la pièce 68 et constitue le cadre de fixation pour un grillage 76 qui définit des alvéoles de réception des bouchons inférieurs des crayons 34 de matériau fissile et des parties terminales de ceux des tubes guides 13 qui n'appartiennent pas au squelette de l'assemblage.

Cette disposition présente plusieurs avantages Elle permet de réduire la perte de charge du fait que les passages de réfrigérant ont une section accrue. Elle autorise le grandissement axial des crayons 34 et des tubes guides 13 sous irradiation.

Le grillage 76 peut être réalisé de façon à maintenir efficacement l'extrémité des crayons 34 et des tubes guides 13 par serrage et pour empêcher les jets d'entrée de réfrigérant de faire vibrer les crayons et tubes.

Il faut remarquer que l'assemblage peut ainsi être dispensé de la plaque d'arrêt de crayons généralement prévue dans les assemblages de l'art antérieur, ce qui diminue les pertes de charge. Il faut également remarquer que le grandissement sous irradiation vers le bas de ceux des tubes guides 13 qui n'appartiennent pas au squelette, venant simplement en butée sur la plaque 60, est possible.

Les tubes guides 12 qui appartiennent au squelette peuvent être fixés à la plaque 66 de façon classique, par une liaison filetée.

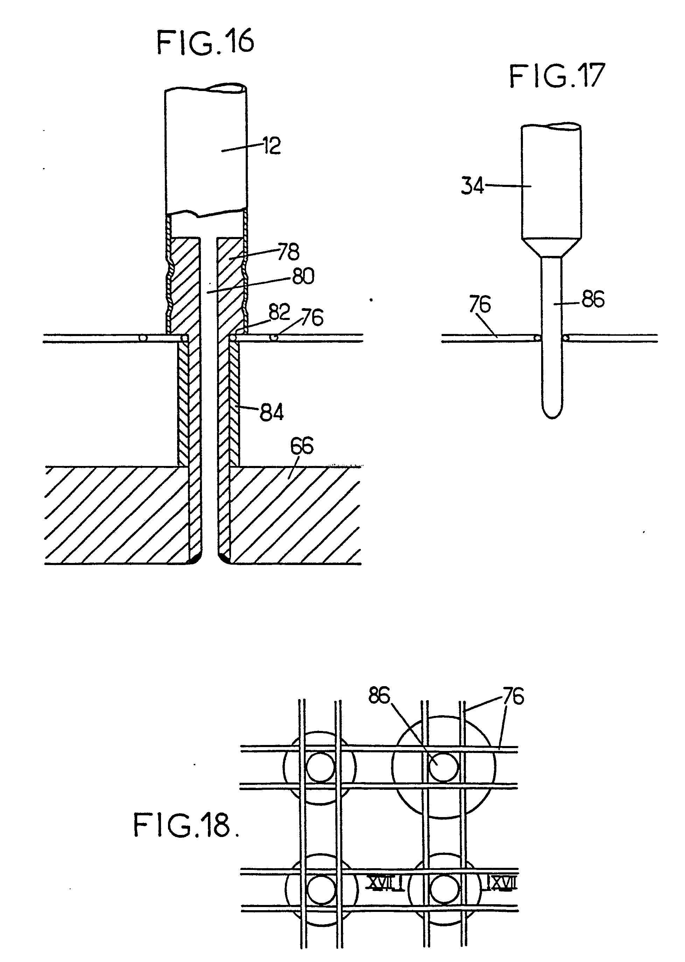

Dans la variante de réalisation montrée en Figure 16, le tube guide 12 est par contre fixé par l'intermédiaire d'un bouchon en acier inoxydable ou en "INCOHEL" 78, percé d'un trou central 80 de passage de réfrigérant. Le tube guide 12 est lié par déformation mécanique, obtenue par exemple par roulage, à la partie haute renflée du bouchon 78. Cette partie renflée se termine par un épaulement 82 d'appui sur le grillage 76. La partie basse, de faible diamètre, du bouchon 78 traverse la plaque 66 à laquelle elle est soudée. Une entretoise 84 entourant la partie basse du bouchon renforce la résistance du grillage 76.

Les Figures 17 et 18 montrent schématiquement un mode de guidage possible des crayons 34 dans la grille 76 de la pièce d'extrémité inférieure. Le bouchon du crayon comporte un prolongement 86 de diamètre tel qu'il est guidé dans une maille du grillage 76. Le guidage permet au crayon de résister aux jets de réfrigérant sortant de la plaque de la pièce d'extrémité inférieure et évite tout déplacement excessif ou intempestif du crayon 34. Mais en même temps ce mode de guidage autorise le grandissement du crayon sous irradiation.

A titre d'exemple, on peut donner les dimensions suivantes pour le grillage 76 et le crayon le grillage 76 est constitué par des fils ronds en alliage dit "INCONEL" ayant un diamètre d'environ 1,5 mm, entrecroisés et soudés à leur intersection. Ces fils sont également soudés au cadre constitué par les jupes 74. Le prolongement 86 peut avoir un diamètre de 4 mm, correspondant à la dimension de maille du grillage 76.

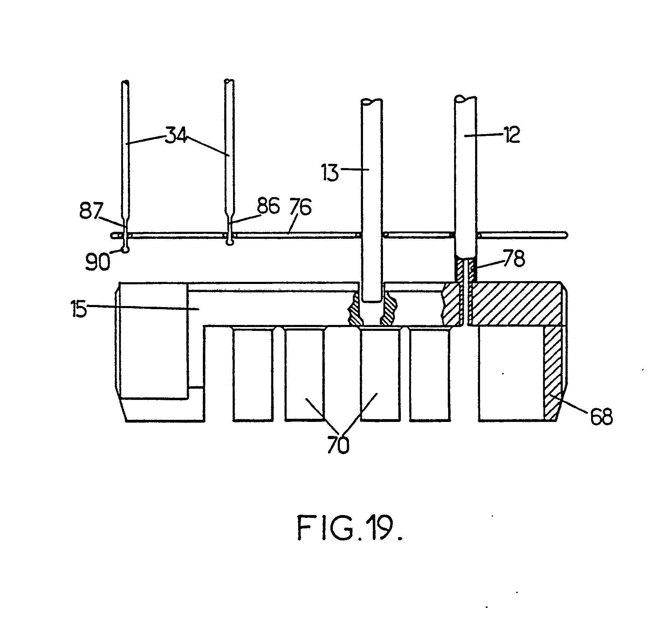

Dans la variante de réalisation de l'invention montrée en Figure 19, le grillage 76 est libre, au lieu d'être fixé à la pièce d'extrémité inférieure par une jupe comme dans le cas de la Figure 14. Cette solution permet de diminuer la flèche de l'assemblage due à l'effet de raccourcissement différentiel des tubes guides 12 et des crayons 34 lorsque la température du réacteur revient de la température de fonctionnement à la température après arrêt. Pour retenir le grillage 76, ceux des crayons 34 qui sont placés à la périphérie des faisceaux peuvent avoir un prolongement 87 plus long que les prolongements 86 des crayons centraux et être munis d'un renflement terminal 90 de retenue. Des renflements similaires peuvent être prévus sur les prolongements 86 également.

La réduction des déformations en arc de l'assemblage est assurée par les frottements importants exercés par le grillage 76 sur les bouchons des crayons, du fait que ce grillage exerce, sur les prolongements 86 et 87, un serrage important pour éviter la mise en vibration des crayons sous l'action des jets de réfrigérant. Ce frottement exercé sur les crayons est très supérieur à celui qu'ils subissent à la traversée des grilles 18, 20, 21 et 22. Au contraire, les tubes guides 12, qu'ils appartiennent au squelette ou qu'ils soient montés flottants, sont prévus de facon à pouvoir coulisser librement dans la grille 76.

Du fait de la longueur supplémentaire donnée aux prolongemnts 87, l'allongement différentiel intervenant éventuellement entre les crayons 34 d'un même assemblage est toléré sans qu'il y ait coincement.

**Revendications**

1. Assemblage de combustible pour réacteur nucléaire du type comprenant un squelette comportant deux pièces d'extrémité reliées par des éléments allongés, tels que des tubes guides, et plusieurs grilles différentes réparties le long des tubes guides et formant des cellules de maintien d'un faisceau de crayons de combustible aux noeuds d'un réseau régulier; il y a parmi ces grilles au moins une grille médiane conçue de façon à résister aux chocs latéraux, située dans la partie médiane de la longueur de l'assemblage, assemblage qui est caractérisé en ce que la ou les grilles médianes (20) sont munies d'ailettes de création de turbulences dans l'écoulement du réfrigérant le long de l'assemblage et en ce qu'il comporte des grilles basses (18) démunies d'ailettes et assurant l'entretoisement des crayons, et des grilles hautes (21) munies d'ailettes et assurant l'entretoisement des crayons, les grilles hautes et basses imposant au réfrigérant une perte de charge plus faible que les grilles médianes.

2. Assemblage selon la revendication 1, caractérisé en ce que les grilles médianes (20) ont une hauteur supérieure à celle des grilles hautes et basses et en ce que chaque paroi d'une cellule de grille médiane présente deux bossages d'appui sur l'élément de combustible correspondant, ces bossages étant décalés dans le sens de l'écoulement.

3. Assemblage selon la revendication 1 ou 2, caractérisé en ce que les grilles médianes (20) sont prolongées vers l'amont dans le sens de l'écoulement par des languettes (42) présentant un pli (44) dans le sens longitudinal et jouant le rôle de raidisseur.

4. Assemblage selon la revendication 1, 2 ou 3, caractérisé en ce que les grilles sont réparties à intervalles progressivement décroissants dans le sens de l'écoulement.

5. Assemblage selon l'une quelconque des revendications précédentes, caractérisé en ce qu'il comprend, au dessus des grilles de maintien (18, 20, 21) constituées en matériau à faible coefficient d'absorption, une grille supplémentaire (22) de supportage des crayons, démunie d'ailettes.

6. Assemblage selon la revendication 5, caractérisé en ce que la grille supplémentaire (22) est fixée à certains au moins des tubes guides (12) et est munie de bossages (54) de soutien d'épaulements ménagés sur les bouchons des crayons (34) et en ce que la pièce d'extrémité supérieure (16) est munie de moyens limitant le déplacement vers le haut des crayons de façon que ces derniers ne puissent se dilater que vers le bas en glissant dans les autres grilles.

7. Assemblage selon la revendication 6, caractérisé en ce que a pièce d'extrémité supérieure (16) comporte une plaque (60) ayant de larges ouvertures de passage du réfrigérant, fixée aux tubes guides (12) qui appartiennent au squelette, et un plateau (64) solidaire de la plaque (60) constitué par un quadrillage dont les noeuds coïncident avec l'axe des crayons, formant les moyens de limitation de déplacement de ces derniers.

8. Assemblage selon l'une quelconque des revendications précédentes, caractérisé en ce qu'il comprend, immédiatement au-dessus de la pièce d'extrémité inférieure (15), un grillage (76) de guidage de prolongements (86) des bouchons des crayons (34).

9. Assemblage selon la revendication 8, caractérisé en ce que le grillage (76) est fixé à sa périphérie à une jupe (74) appartenant à la pièce d'extrémité inférieure (15).

10. Assemblage selon la revendication 8, caractérisé en ce que le grillage (76) est monté coulissant sur les prolongements (86) des bouchons des crayons, certains au moins desdits bouchons étant munis, à leur extrémité, d'un renflement (90) de retenue du grillage.

**Patentansprüche**

1. Brennelementkassette für Kernreaktoren mit einem Skelett, das zwei Endstücke aufweist, die untereinander durch längliche Elemente, wie Führungsrohre, verbunden sind und mehrere verschiedene entlang der Führungsrohre verteilte Gitter aufweist, die Halterungszellen eines Brennelementbündels an den Schnittpunkten eines regelmäßigen Gitterwerks bilden, wobei sich unter den Gittern mindestens ein mittleres Gitter befindet, das so ausgebildet ist, daß es seitlichen Schockeinwirkungen widersteht und daß im mittleren Bereich der Länge der Brennelementkassette angeordnet ist, dadurch gekennzeichnet, daß das mittlere Gitter (20) oder die mittleren Gitter (20) mit Flügeln versehen sind, die im Strom des Kühlmittels entlang der Brennelementkassette Turbulenzen erzeugen und dadurch, daß untere Gitter (18), die nicht mit Flügeln versehen sind und die Beabstandung der Stäbe gewährleisten, sowie obere Gitter (21), die Flügel aufweisen und die Beabstandung der Stäbe gewährleisten, vorgesehen sind, wobei die oberen und unteren Gitter einen geringeren Druckverlust des Kühlmittels als die mittleren Gitter bewirken.

2. Brennelementkassette nach Anspruch 1, dadurch gekennzeichnet, daß die mittleren Gitter (20) eine Höhe haben, die größer als die der oberen und unteren Gitter ist und dadurch, daß jede Wandung einer mittleren Gitterzelle zwei Ausbuchtungen zur Anlage auf dem entsprechenden Brennelement aufweisen, wobei die Ausbuchtungen in Flußrichtung versetzt sind.

3. Brennelementkassette nach Anspruch 1 oder 2, dadurch gekennzeichnet, daß die mittleren Gitter (20) stromauf bezüglich der Flußrichtung durch Flügel 42 verlängert sind, die in Längsrichtung einen Falz aufweisen und die eine Versteifung bilden.

4. Brennelementkassette nach den Ansprüchen 1, 2 oder 3, dadurch gekennzeichnet, daß die Gitter in Abständen verteilt angeordnet sind, die in Flußrichtung progressiv abnehmen.

5. Brennelementkassette nach einem der vorstehenden Ansprüche, gekennzeichnet durch ein unterhalb der Halterungsgitter (18, 20, 21) angeordnetes zusätzliches Gitter (22) zur Unterstützung der Stäbe, das nicht mit Flügeln versehen ist und aus einem Material mit schwachem Absorptionskoeffizienten besteht.

6. Brennelementkassette nach Anspruch 5, dadurch gekennzeichnet, daß das zusätzliche Gitter (22) mindestens an bestimmten Führungsrohren (12) befestigt ist und mit Ausbuchtungen (54) versehen ist, zum Abstützen von Vorspulen, mit denen die Verschlüße der Brennstäbe (34) versehen sind und dadurch, daß das obere Endstück (16) mit Organen versehen ist, die die Verschiebung der Brennstäbe nach oben derart begrenzen, daß letztere sich nur nach unten ausdehnen können, indem sie in den anderen Gitter gleiten.

7. Brennelementkassette nach Anspruch 6, dadurch gekennzeichnet, daß das obere Endstück (16) eine Platte (60) aufweist, die breite Kühlmitteldurchlaßöffnungen aufweist, und die an den Führungsrohren (12), die zum Skelett gehören, befestigt ist und ferner eine Platte (64) aufweist, die mit der Platte (60) fest verbunden ist und aus einem quadratischen Gitternetz besteht, dessen Kreuzungspunkte mit der Achse der Brennstäbe zusammenfallen, wodurch diese Organe zur Begrenzung der Bewegung der Brennstäbe bilden.

8. Brennelementkassette nach einem der vorstehenden Ansprüche, gekennzeichnet durch ein unmittelbar oberhalb des unteren Endstücks (15) angeordneten Führungsgitter (76) zur Führung der Verlängerung (86) der Verschlüße der Brennstäbe (34).

9. Brennelementkassette nach Anspruch 8, dadurch gekennzeichnet, daß das Gitter (76) an seinem Rand an einer Schürze (74) befestigt ist, die zu dem unteren Endstück (15) gehört.

10. Brennelementkassette nach Anspruch 8, dadurch gekennzeichnet, daß das Gitter (76) gleitend auf den Verlängerungen (86) der Verschlüße der Brennstäbe angeordnet sind, wobei mindestens einige der Verschlüße an ihrem Ende mit einer Ausbauchung (90) zur Halterung des Gitters versehen sind.

**Claims**

1. Fuel assembly for nuclear reactor, of the type comprising a skeleton having two end pieces connected together by elongate elements such as guide tubes and a plurality of mutually different grids spaced apart along the guide tubes and defining cells for holding a bundle of fuel elements at the nodes of a regular lattice wherein, among the grids, there is at least a median grid designed so as to withstand lateral shocks, located in a midportion of the length of the assembly, said assembly being characterized in that the median grid or grids (20) are provided with fins for creating turbulences in the flow of the coolant along the assembly and in that it further comprises bottom grids (18) devoid of fins and providing cross-bracing of the elements and top grids (21) provided with fins and insuring cross-bracing of the elements, the top and bottom grids subjecting the coolant to a head loss smaller than the median grids.

2. Assembly according to claim 1, characterized in that the median grids (20) have a height greater than that of the top and bottom grids and in that each wall of a median grid cell has two bosses for bearing on the corresponding fuel element, said bosses being offset in the flow direction.

3. Assembly according to claim 1 or 2, characterized in that the median grids (20) are extended upstream by tabs (42) having a fold (44) in the longitudinal direction and acting as stiffeners.

4. Assembly according to claim 1, 2 or 3, characterized in that the grids are spaced apart at progressively decreasing intervals in the flow direction.

5. Assembly according to any one of the preceding claims, characterized in that it comprises, above the holding grids (18, 20, 21) formed from a low absorption coefficient material, an additional grid (22) for supporting the elements, devoid of fins.

6. Assembly according to claim 5, characterized in that the additional grid (22) is fixed to some at least of the guide tubes (12) and is provided with bosses (54) supporting shoulders formed on the plugs of the elements (34) and in that the upper end piece (16) is provided with means limiting the amount of upward movement of the elements so that the latter can only extend downwardly by sliding in the other grids.

7. Assembly according to claim 6, characterized in that the upper end piece (16) comprises a plate (60) having wide openings for passage of the coolant, fixed to the guide tubes (12) which belong to the skeleton, and a plate (64) fast with the plate (60), formed by a checker board pattern whose nodes coincide with the axis of the elements, forming the means for limiting the movement of the latter.

8. Assembly according to any one of the preceding claims, characterized in that it comprises, immediately above the lower end piece (15), a grating (76) for guiding extensions (86) of the plugs of the elements (34).

9. Assembly according to claim 8, characterized in that the grating (76) is fixed at its periphery to a skirt (74) belonging to the lower end piece (15).

10. Assembly according to claim 8, characterized in that the grating (76) is slidably received on the extensions (86) of the plugs of the elements, some at least of said plugs being provided, at their end, with a bulge (90) for retaining the grating.

FIG.1

FIG.2

FIG.3

FIG.4

FIG.5

FIG. 6

FIG. 9

FIG.7.

FIG.8.

FIG.10

FIG.13.

FIG.11.

FIG.12.

FIG.14.

FIG.15.

FIG.16

FIG.17

FIG.18.

FIG.19.